# FASCICULE DE BREVET EUROPEEN

(11) **EP 1 797 762 B1**
(45) Date de publication et mention de la délivrance du brevet: **20.05.2009**
(21) Numéro de dépôt: 06356141.9
(22) Date de dépôt: 07.12.2006
(51) Int. Cl.: A22C 7/00

(54) **Accessoire de moulage de préparations hachées**
Zusatzgerät zum Formen von gehackten Präparaten
Accessory for moulding chopped preparations

(30) Priorité: 13.12.2005 FR 0512589
(43) Date de publication de la demande: 20.06.2007
(73) Titulaire: SEB SA, 69130 Ecully (FR)
(72) Inventeur: Astegno, Jean Paul, 64420 Espoey (FR); Charles, Patrick, 65290 Louey (FR)
(74) Mandataire: Kiehl, Hubert

(56) Documents cités:
- EP-A- 1 462 006
- FR-A- 1 299 087
- FR-A- 2 589 686
- US-A- 1 477 548
- US-A- 3 004 283
- US-A- 3 290 721

## Description

La présente invention concerne le domaine technique des appareils électroménagers de préparation culinaire, et concerne plus particulièrement un accessoire prévu pour le moulage de préparations hachées.

Il est connu du document FR 1 299 087 un dispositif agencé au débouché d'un appareil de type hachoir à vis, prévu pour fabriquer des beefsteaks reconstitués à partir de viande hachée. La préparation hachée est collectée dans un réceptacle monté coulissant dans un bâti de l'accessoire. Le réceptacle coulissant est monté entre deux parois et forme une empreinte constituée par un évidemment traversant. Un éjecteur est proposé pour retirer le beefsteak reconstitué. Un tel dispositif, relativement sophistiqué, relève plutôt d'une utilisation professionnelle.

Un but de la présente invention est de proposer un accessoire de moulage de préparations hachées permettant de faciliter le démoulage.

Un autre but de la présente invention est de proposer un accessoire de moulage de préparations hachées présentant une construction économique.

Ces buts sont atteints avec un accessoire de moulage de préparations hachées, prévu pour être placé dans un logement d'un dispositif de moulage de préparations hachées comportant un conduit d'admission d'aliments hachés, ledit accessoire présentant une paroi périphérique définissant un espace de réception d'aliments hachés, et une ouverture de démoulage s'étendant jusqu'à la paroi périphérique, du fait que la paroi périphérique est fendue transversalement et présente deux bords d'extrémité susceptibles d'être écartés l'un de l'autre. L'écartement des deux bords d'extrémité permet de faciliter le décollement des aliments hachés de la paroi périphérique et donc leur démoulage. Toutefois les deux bords d'extrémité de la paroi périphérique définissant l'espace de réception d'aliments hachés peuvent être raccordés entre eux à l'extérieur de la paroi périphérique.

Selon une disposition avantageuse, ledit accessoire présente une face latérale comportant une ouverture de remplissage prévue pour être disposée en regard du conduit d'admission d'aliments hachés, et une autre face latérale définissant l'ouverture de démoulage. En alternative, l'ouverture de démoulage peut être disposée en regard du conduit d'admission d'aliments hachés.

Avantageusement alors la face latérale et l'autre face latérale sont parallèles. Cette disposition permet de simplifier la construction et l'utilisation dudit accessoire. Cette disposition permet aussi une cuisson plus homogène des préparations hachées obtenues.

Avantageusement alors, l'ouverture de remplissage s'étend jusqu'à la paroi périphérique. Cette disposition permet également de simplifier la construction et l'utilisation dudit accessoire. En alternative, l'accessoire peut comporter une paroi de fond dégageant l'ouverture de remplissage, la paroi de fond étant raccordée à la paroi périphérique de manière à permettre une déformation au moins locale de la paroi périphérique.

Avantageusement, la paroi périphérique est au moins partiellement déformable élastiquement par flexion. En d'autres termes, la paroi périphérique présente une charnière élastique. Cette disposition permet de réaliser ledit accessoire en une seule pièce. La construction dudit accessoire peut être très économique. Ledit accessoire peut être réalisé dans un matériau relativement rigide tel un thermoplastique. En alternative, l'accessoire de moulage de préparations hachées pourrait notamment être réalisé en deux parties associées à une charnière élastique articulée.

Avantageusement encore, ledit accessoire est muni de moyens de préhension, pour faciliter le retrait dudit accessoire du logement.

Avantageusement encore, deux moyens de préhension sont agencés aux extrémités de la paroi périphérique fendue. Cette disposition permet de faciliter le démoulage de la préparation moulée en exerçant une traction sur les extrémités de la paroi périphérique fendue.

Avantageusement encore, la paroi périphérique présente une nervure extérieure sur au moins une portion de sa longueur. Cette disposition permet de rigidifier une ou plusieurs zones de la paroi périphérique et de définir plus précisément ses déformations.

Avantageusement encore, la paroi périphérique présente au moins une nervure interne permettant de diviser le flux de remplissage. Cette disposition permet d'obtenir plusieurs préparations de taille plus réduite, par exemple pour les enfants, ou pour l'apéritif.

Avantageusement encore, la paroi périphérique présente au moins une zone interne convexe sur toute la hauteur de ladite paroi périphérique. Cette disposition permet de varier la forme des aliments hachés, notamment pour réaliser des géométries présentant des lobes, permettant une cuisson à coeur plus rapide, ou encore des géométries évoquant le type d'aliment, par exemple le poisson.

Avantageusement encore les bords d'extrémité sont susceptibles d'être rapprochés l'un de l'autre. Cette disposition permet de commencer le démoulage de manière automatique lorsque la paroi périphérique n'est pas retenue dans ses déplacements.

Avantageusement alors, dans un dispositif de moulage de préparations hachées, comportant un logement recevant un accessoire de moulage de préparations hachées tel que précité, les bords d'extrémité sont rapprochés l'un de l'autre lorsque l'accessoire de moulage de préparations hachées est en place dans le logement. Ainsi après l'extraction de l'accessoire de moulage de préparations hachées du logement, les bords d'extrémité tendent à s'écarter sous l'effet de la charnière élastique, et contribuent à faciliter le démoulage.

L'invention sera mieux comprise à l'étude de trois exemples de réalisation, pris à titre nullement limitatif, illustrés dans les figures annexées, dans lesquelles:
- la figure 1 est une vue en perspective d'un bloc de coupe de hachoir à vis associé à un dispositif de moulage de préparations hachées comprenant un accessoire de moulage de préparations hachées selon l'invention,
- la figure 2 est une vue en éclaté du bloc de coupe de hachoir à vis et du dispositif de moulage de préparations hachées montrés à la figure 1,
- la figure 3 est une vue en coupe du bloc de coupe de hachoir à vis et du dispositif de moulage de préparations hachées montrés aux figures 1 et 2,
- la figure 4 illustre un support du dispositif de moulage de préparations hachées montré aux figures 1 à 3,
- la figure 5 est une vue en éclaté du support montré à la figure 4,
- les figures 6 et 7 illustrent un premier exemple de réalisation d'un accessoire de moulage de préparations hachées selon l'invention,
- les figures 8 et 9 illustrent un deuxième exemple de réalisation d'un accessoire de moulage de préparations hachées selon l'invention,
- la figure 10 illustre un troisième exemple de réalisation d'un accessoire de moulage de préparations hachées selon l'invention,
- la figure 11 illustre le dispositif de moulage de préparations hachées montré aux figures 1 à 3, dans une position fermée de remplissage,
- la figure 12 illustre le dispositif de moulage de préparations hachées montré aux figures 1 à 3, dans une position semi-ouverte d'avertissement,
- la figure 13 illustre le dispositif de moulage de préparations hachées montré aux figures 1 à 3, dans une position ouverte permettant le retrait du moule.

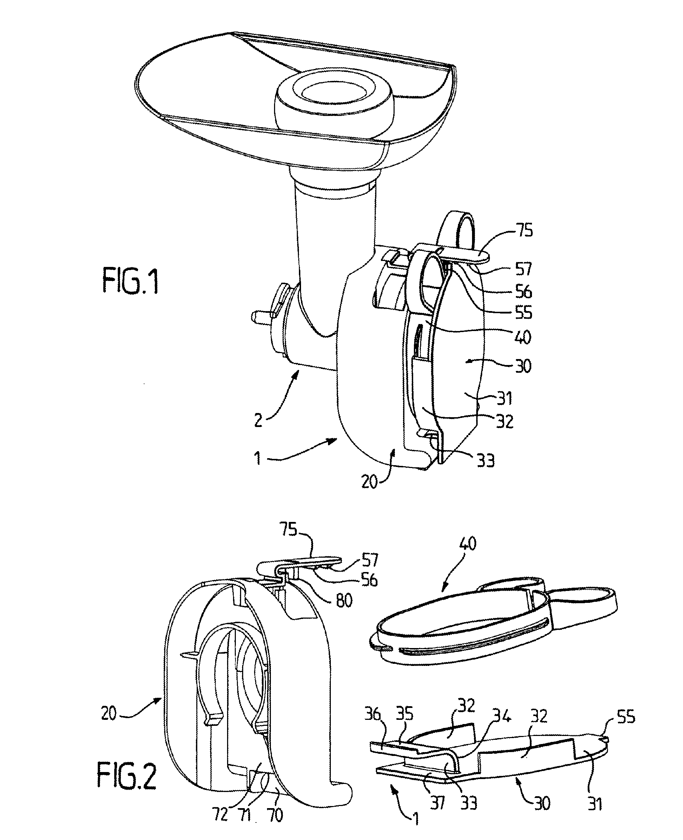

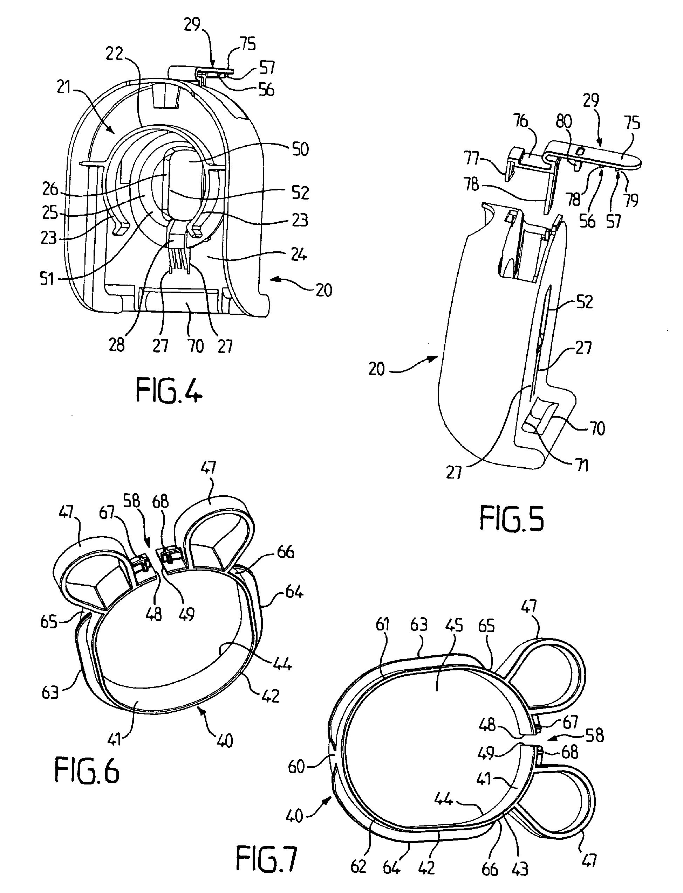

Les figures 1 à 3 illustrent un dispositif de moulage de préparations hachées 1 susceptible d'être utilisé avec différents accessoires de moulage de préparations hachées 40, 40', 40" selon l'invention, illustrés plus particulièrement aux figures 6 à 10.

Le dispositif de moulage de préparations hachées 1 est monté sur un écrou 7 d'un bloc de coupe 2. Le bloc de coupe 2 comporte un corps creux 3 présentant une ouverture supérieure 4 sur laquelle est monté un plateau 5 servant à l'introduction des aliments, et une ouverture latérale 6 fermée par un écrou 7. Une vis 8 présentant un axe 9 est agencée dans le corps creux 3. Un couteau 10 est monté sur l'axe 9 à une extrémité de la vis 8. Un organe d'entraînement 11 est prévu à l'autre extrémité de la vis 8. Une grille 12 est agencée entre le couteau 10 et l'écrou 7.

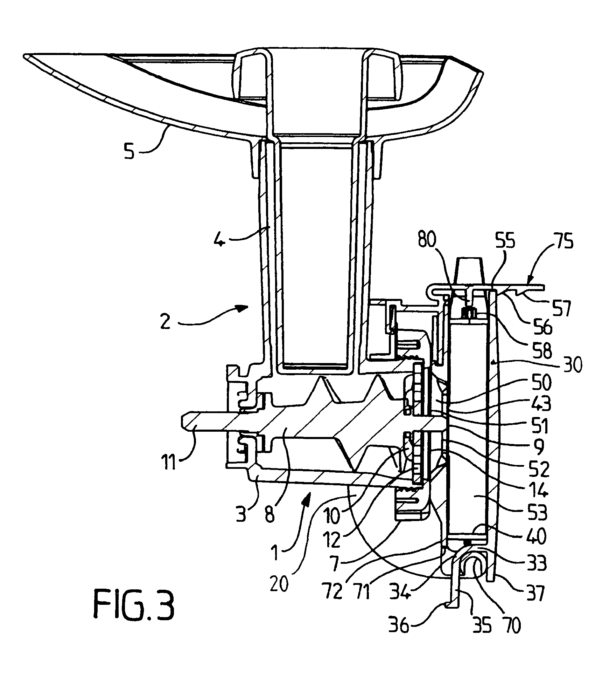

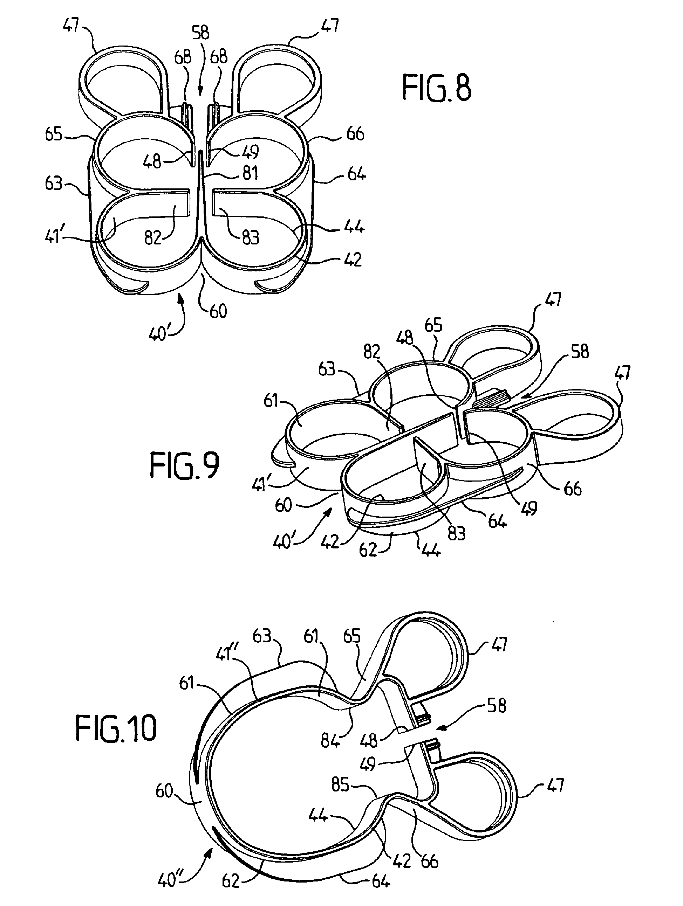

Tel que visible sur les figures 2 et 3, le dispositif de moulage de préparations hachées 1 comporte un support 20, un élément de boîtier 30 et un accessoire de moulage de préparations hachées 40. L'accessoire de moulage de préparations hachées 40 selon un premier exemple de réalisation illustré plus particulièrement aux figures 6 et 7 peut être remplacé par un accessoire de moulage de préparations hachées 40' selon un deuxième exemple de réalisation illustré aux figures 8 et 9, ou par un accessoire de moulage de préparations hachées 40" selon un troisième exemple de réalisation illustré à la figure 10. Le support 20 est prévu pour être monté sur une sortie d'évacuation 14 d'aliments hachés. Plus particulièrement, le support 20 est prévu pour être monté sur l'écrou 7. L'élément de boîtier 30 est prévu pour être relié au support 20.

Le support 20 et l'élément de boîtier 30 définissent un conduit 50 débouchant dans un logement 53 prévu pour recevoir l'accessoire de moulage de préparations hachées 40, 40', 40". Le conduit 50 présente une ouverture d'entrée 51 prévue pour être agencée en regard de la sortie d'évacuation 14 et une ouverture de sortie 52 débouchant dans le logement 53. L'ouverture d'entrée 51 est ménagée sur le support 20. Le logement 53 est défini par le support 20 et l'élément de boîtier 30. L'accessoire de moulage de préparations hachées 40, 40', 40" est monté amovible dans le logement 53. D'après l'orientation usuelle du bloc de coupe 2, l'ouverture d'entrée 51 est latérale.

Le support 20 illustré aux figures 4 et 5 comporte un organe de montage 21 comprenant une paroi d'appui supérieure 22 prolongée de part et d'autre par deux pattes inférieures élastiques 23 recourbées vers l'intérieur. L'organe de montage 21 est prévu pour coiffer l'écrou 7. La paroi d'appui supérieure 22 est reliée à une paroi principale 24 définissant partiellement le logement 53. La paroi principale 24 présente l'ouverture d'entrée 51 ainsi que l'ouverture de sortie 52. L'ouverture d'entrée 51 est prolongée par un chanfrein 25 resserrant le conduit 50. L'ouverture de sortie 52 est précédée d'un chanfrein 26 resserrant le conduit 50. La section de l'ouverture d'entrée 51 est supérieure à la section de l'ouverture de sortie 52. Deux découpes 27 ménagées dans la paroi principale 24 ménagent une languette élastique de retenue 28 prévue pour le passage de l'axe 9 de la vis 8 du bloc de coupe 2. La languette élastique de retenue 28 est agencée à l'opposé de la paroi d'appui supérieure 22. A cet effet les faces supérieure et inférieure de la languette élastique de retenue 28 sont chanfreinées.

L'élément de boîtier 30 visible sur les figures 1 à 3 comporte une paroi frontale 31 définissant partiellement le logement 53. La paroi frontale 31 est partiellement prolongée par deux parois latérales 32 s'incurvant vers l'intérieur dans leur partie inférieure. L'élément de boîtier 30 comprend une fenêtre transparente ou translucide avantageusement formée par la paroi frontale 31. L'élément de boîtier 30 peut être réalisé entièrement en matériau transparent ou translucide. A titre de variante, la paroi frontale 31 peut notamment comporter une fenêtre transparente ou translucide.

L'élément de boîtier 30 est monté amovible sur le support 20. A cet effet l'élément de boîtier 30 comporte une paroi d'appui 33 issue de la paroi frontale 31 en dessous des parois latérales 32. La paroi d'appui 33 présente un arrondi 34 orienté vers le bas, prolongé par une paroi de retenue 35. La paroi de retenue 35 est complétée par un élément d'arrêt 36. Une paroi de guidage 37 prolonge la paroi frontale 31 en dessous du raccordement de la paroi d'appui 33. Le support 20 comporte un barreau 70 prévu pour recevoir la paroi d'appui 33 et la paroi de guidage 37. Le support 20 comporte une butée de retenue 71 prévue pour coopérer avec la paroi de retenue 35 et une butée d'arrêt 72 prévue pour coopérer avec l'élément d'arrêt 36.

Le support 20 comporte une pièce rapportée 29, mieux visible sur la figure 5, s'étendant partiellement au-dessus de l'ouverture de sortie 52. La pièce rapportée 29 forme une languette élastique 75 issue d'une base 76 présentant des éléments de montage 77, 74 sur le corps du support 20.

L'élément de boîtier 30 comporte un organe d'accrochage 55 prévu pour venir en prise avec un organe de retenue 56 du support 20. L'organe d'accrochage 55 est formé par l'extrémité de la paroi frontale 31 opposée à la paroi de guidage 37. L'organe de retenue 56 est formé par la languette élastique 75 du support 20 munie d'un crochet inférieur 78. L'organe d'accrochage 55 est prévu pour venir en prise avec un autre organe de retenue 57 du support 20. L'autre organe de retenue 57 est formé par la languette élastique 75 du support 20 munie d'un autre crochet inférieur 79 disposé entre le crochet inférieur 78 et l'extrémité libre de la languette élastique 75. La languette élastique 75 présente un organe d'actionnement 80 disposé entre le crochet inférieur 78 et la base 76.

L'accessoire de moulage de préparations hachées 40 selon le premier exemple de réalisation illustré aux figures 6 et 7 est prévu pour être placé dans le logement 53 du dispositif de moulage de préparations hachées 1 présentant le conduit 50 d'admission d'aliments hachés. L'accessoire de moulage de préparations hachées 40 présente une paroi périphérique 41 définissant un espace de réception d'aliments hachés et une ouverture de démoulage 45 s'étendant jusqu'à la paroi périphérique 41. L'accessoire de moulage de préparations hachées 40 présente une face latérale 42 comportant une ouverture de remplissage 43 s'étendant jusqu'à la paroi périphérique 41, et une autre face latérale 44 définissant l'ouverture de démoulage 45. L'ouverture de remplissage 43 s'étendant jusqu'à la paroi périphérique 41 est prévue pour être disposée en regard de l'ouverture de sortie 52 d'aliments hachés du conduit 50.

L'accessoire de moulage de préparations hachées 40 est dépourvu de paroi de fond. La paroi périphérique 41 est fendue transversalement. La paroi périphérique 41 forme une charnière élastique médiane 60. La paroi périphérique 41 présente deux bords d'extrémité 48, 49 susceptibles d'être rapprochés et écartés l'un de l'autre, les deux bords d'extrémité 48, 49 étant écartés l'un de l'autre au repos, tel que représenté à la figure 7. La charnière élastique médiane 60 est prolongée par deux parties recourbées 61, 62 présentant chacune une nervure extérieure longitudinale 63, 64. Les nervures extérieures longitudinales 63, 64 permettent de rigidifier les parties recourbées 61, 62. L'accessoire de moulage de préparations hachées 40 est muni de moyens de préhension 47. Deux moyens de préhension 47 sont agencés aux extrémités de la paroi périphérique 41 fendue transversalement. Deux nervures extérieures d'extrémité 67, 68 s'étendent entre les moyens de préhension 47 et les bords d'extrémité 48, 49 de la paroi périphérique 41 fendue transversalement. Les nervures extérieures longitudinales 63, 64 s'interrompent avant les moyens de préhension 47, ménageant des charnières élastiques latérales 65, 66. Ainsi la paroi périphérique 41 est au moins partiellement déformable élastiquement par flexion, au niveau de la charnière élastique médiane 60 et des charnières élastiques latérales 65, 66.

L'accessoire de moulage de préparations hachées 40 présente un plan de symétrie passant par les nervures extérieures longitudinales 63, 64. Ainsi l'ouverture de remplissage 43 pourrait servir d'ouverture de démoulage, et l'ouverture de démoulage 45 pourrait servir d'ouverture de remplissage. La face latérale 42 et l'autre face latérale 44 sont parallèles.

L'accessoire de moulage de préparations hachées 40 comporte un organe de commande 58 prévu pour coopérer avec l'organe de retenue 56. L'organe de commande 58 est formé par les nervures extérieures d'extrémité 67, 68. Ainsi l'organe de commande 58 est agencé près d'une extrémité de la paroi périphérique 41 fendue transversalement.

Les nervures extérieures d'extrémité 67, 68 sont susceptibles de venir en contact avec l'organe d'actionnement 80 lorsque l'accessoire de moulage de préparations hachées 40 est en place dans l'élément de boîtier 30. La pression exercée par les aliments hachés dans le dispositif de moulage de préparations hachées 1 est susceptible de libérer l'organe d'accrochage 55 de la prise avec l'organe de retenue 56, autorisant un déplacement de l'élément de boîtier 30 par rapport au support 20 libérant un espace d'expansion pour les aliments hachés. Plus particulièrement, la pression exercée par les aliments hachés est susceptible de déplacer l'organe de commande 58, formé par les nervures extérieures d'extrémité 67, 68. L'organe de commande 58 coopère alors avec l'organe de retenue 56 formé par la languette élastique 75 du support 20 munie du crochet inférieur 78, pour libérer l'organe d'accrochage 55 formé par l'extrémité de la paroi frontale 31 opposée à la paroi de guidage 37.

L'accessoire de moulage de préparations hachées 40' selon le deuxième exemple de réalisation illustré aux figures 8 et 9 diffère de l'accessoire de moulage de préparations hachées 40 selon le premier exemple de réalisation en ce que la paroi périphérique 41' présente des nervures internes 81, 82, 83 permettant de diviser le flux de remplissage d'aliments hachés. La nervure interne 81 s'étend à partir de la charnière élastique médiane 60 vers l'intérieur de la paroi latérale. La nervure interne 81 s'interrompt à distance des bords d'extrémité 48, 49 de la paroi périphérique 41'. La nervure interne 81 peut rejoindre la paroi périphérique 41' au niveau des bords d'extrémité 48, 49 lorsque l'accessoire de moulage de préparations hachées 40' est en place dans l'élément de boîtier 30. La nervure interne 81 permet de diviser en deux parties le flux de remplissage d'aliments hachés. Les nervures internes 82, 83 s'étendent à partir des zones internes de la paroi périphérique 41' correspondant aux nervures extérieures longitudinales 63, 64. Les nervures internes 82, 83 s'interrompent de part et d'autre de la nervure interne 81. Les nervures internes 82, 83 peuvent rejoindre la nervure interne 81 lorsque l'accessoire de moulage de préparations hachées 40' est en place dans l'élément de boîtier 30. Les nervures internes 81, 82, 83 permettent de diviser en quatre parties le flux de remplissage d'aliments hachés, pour réaliser des préparations hachées de taille plus réduite.

A titre de variante, la paroi périphérique 41' de l'accessoire de moulage de préparations hachées 40' peut présenter au moins une nervure interne permettant de diviser le flux de remplissage d'aliments hachés.

L'accessoire de moulage de préparations hachées 40" selon le troisième exemple de réalisation illustré à la figure 10 diffère de l'accessoire de moulage de préparations hachées 40 selon le premier exemple de réalisation en ce que la paroi périphérique 41" présente deux zones internes convexes 84, 85 s'étendant sur toute la hauteur de ladite paroi périphérique 41". Plus particulièrement, les zones internes convexes 84, 85 sont ménagées au niveau des charnières élastiques latérales 65, 66.

A titre de variante, la paroi périphérique 41' de l'accessoire de moulage de préparations hachées 40' peut présenter au moins une zone interne convexe s'étendant sur toute la hauteur de ladite paroi périphérique.

Le dispositif de moulage de préparations hachées 1 et les accessoires de moulage de préparations hachées 40 ; 40' ; 40" s'utilisent de la manière suivante.

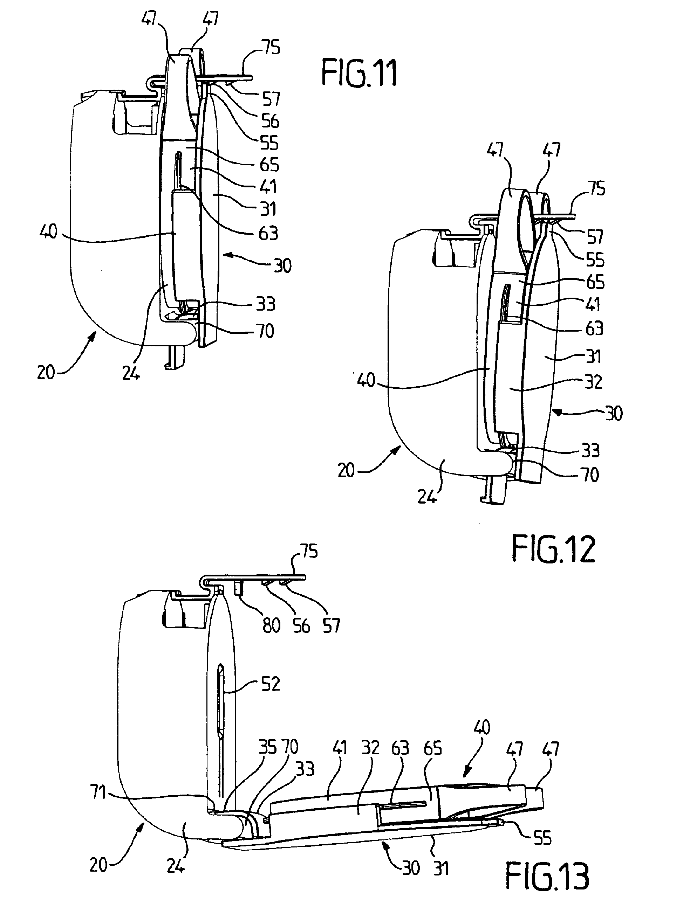

L'utilisateur monte sur un bloc moteur de hachoir le bloc de coupe 2 avec l'écrou 7, puis met en place l'organe de montage 21 du support 20 sur l'écrou 7. L'utilisateur peut ensuite assembler l'élément de boîtier 30 sur le support 20 en disposant la paroi d'appui 33 sur le barreau 70. L'utilisateur dispose alors l'accessoire de moulage de préparations hachées 40 ; 40' ; 40" sur la paroi frontale 31 de l'élément de boîtier 30, en utilisant par exemple les organes de préhension 47. Pour cela, l'utilisateur peut exercer une pression sur la paroi périphérique 41 pour déformer la charnière élastique médiane 60, de manière à ce que les nervures extérieures 63, 64 puissent venir en appui à l'intérieur des parois latérales 32 grâce à la charnière élastique médiane 60. Le logement 53 défini par le support 20 et l'élément de boîtier 30 présente ainsi une ouverture d'introduction prévue pour la mise en place de l'accessoire de moulage de préparations hachées 40 ; 40' ; 40", la figure 3 illustrant le logement 53 recevant l'accessoire de moulage de préparations hachées 40. Les bords d'extrémité 48, 49 de la paroi périphérique 41 en place dans le logement 53 sont rapprochés par rapport à leur position de repos. Ainsi les bords d'extrémité 48, 49 sont rapprochés l'un de l'autre lorsque l'accessoire de moulage de préparations hachées 40 ; 40' ; 40" est en place dans le logement 53. Si désiré, la paroi périphérique 41 peut être conçue de manière à ce que les bords d'extrémité 48, 49 soient en contact l'un avec l'autre lorsque l'accessoire de moulage de préparations hachées 40 ; 40' ; 40" est disposé dans le logement 53. L'utilisateur peut ensuite faire pivoter l'élément de boîtier 30 par rapport au support 20 jusqu'à ce que l'organe d'accrochage 55 vienne en prise avec l'organe de retenue 56, tel que représenté à la figure 11.

L'utilisateur introduit ensuite les aliments dans le bloc de coupe 2. Les aliments hachés issus de la sortie d'évacuation 14 entrent dans le conduit 50, passent l'ouverture de remplissage 43 et atteignent l'accessoire de moulage de préparations hachées 40 ; 40' ; 40" disposé dans le logement 53. L'utilisateur peut contrôler par la fenêtre transparente ou translucide de la paroi frontale 31 le remplissage de l'accessoire de moulage de préparations hachées 40 ; 40' ; 40" et arrêter le moteur du hachoir lorsque le remplissage est jugé suffisant.

Toutefois si l'utilisateur n'est pas suffisamment attentif, les aliments hachés recueillis dans le dispositif de moulage de préparations hachées 1 exercent une pression sur la paroi périphérique 41 de l'accessoire de moulage de préparations hachées 40 ; 40' ; 40". Les charnières élastiques latérales 65, 66 se déforment et permettent à l'organe de commande 58 formé par les nervures extérieures d'extrémité 67, 68 de repousser l'organe d'actionnement 80 issu de la languette élastique 75. La déformation de la languette élastique 75 écarte l'organe de retenue 56 de l'organe d'accrochage 55. La matière hachée peut alors pousser la paroi frontale 31, provoquant le pivotement de l'élément de boîtier 30 sur le support 20. L'espace d'expansion ainsi libéré pour les aliments hachés provoque une diminution de l'effort exercé sur la paroi périphérique 41. Les charnières élastiques latérales 65, 66 exercent un effort de rappel écartant l'organe de commande 58 de l'organe d'actionnement 80. La languette élastique 75 tend à reprendre sa position de repos. L'autre organe de retenue 57 vient alors en prise avec l'organe d'accrochage 55, tel que représenté à la figure 12, après que l'organe de retenue 56 a cessé d'être en prise avec l'organe d'accrochage 55. L'espace libéré entre la paroi périphérique 41 et la paroi principale 24 du support 20 permet l'expansion des aliments hachés sans risque de détériorer le dispositif de moulage de préparations hachées. L'élément de boîtier 30 reste relié au support 20 après que l'organe d'accrochage 55 a cessé d'être en prise avec l'organe de retenue 56.

L'utilisateur peut retirer l'accessoire de moulage de préparations hachées 40 ; 40' ; 40" de l'élément de boîtier 30 en relevant la languette élastique 75. L'autre organe de retenue 57 libère alors l'organe d'accrochage 55 et l'élément de boîtier 30 peut basculer par rapport au support 20 en pivotant sur le barreau 70 sous l'effet de la gravité, pour atteindre la position illustrée à la figure 13.

L'utilisateur peut retirer l'élément de boîtier 30 du support 20 en dégageant l'élément d'arrêt 36 de la butée d'arrêt 72, puis dégager l'accessoire de moulage de préparations hachées 40 ; 40' ; 40" de l'élément de boîtier 30 en rapprochant les organes de préhension 47. Lorsque l'accessoire de moulage de préparation hachées 40 ; 40' ; 40" a été retiré de l'élément de boîtier 30, l'élasticité de la charnière élastique 60 permet l'écartement des bords d'extrémité 48, 49 de la paroi périphérique 41 et de commencer le démoulage de la préparation hachée. Si nécessaire, l'utilisateur peut écarter encore davantage les bords d'extrémité 48, 49 à l'aide des organes de préhension 47 pour terminer le démoulage de la préparation hachée.

La paroi périphérique 41 ; 41' ; 41" fendue transversalement facilite le décollement de la préparation hachée de ladite paroi périphérique. L'absence de paroi de fond permet également de faciliter le décollement de la préparation hachée de ladite paroi périphérique.

A titre de variante complémentaire, la face latérale 42 de l'accessoire de moulage de préparations hachées 40 ; 40' ; 40" comportant une ouverture de remplissage 43 peut comporter également une ou plusieurs parois de fond reliées à la paroi périphérique de manière à permettre l'écartement des deux bords d'extrémité 48, 49. Avantageusement alors, une charnière élastique est prévue entre la liaison d'une paroi de fond et la paroi périphérique et l'un des bords d'extrémité 48, 49.

A titre de variante complémentaire, l'accessoire de moulage de préparations hachées 40 ; 40' ; 40" pourrait comporter deux parties associées à une charnière élastique articulée.

A titre de variante, un accessoire de moulage de préparation hachées selon l'invention pourrait être utilisé dans un logement d'un dispositif de moulage de préparations hachées sans que les bords d'extrémité de la paroi périphérique soient nécessairement rapprochés avant la mise en place dudit accessoire de moulage de préparation hachées dans ledit logement. En d'autres termes, les bords d'extrémité de l'accessoire de moulage de préparation hachée pourraient être jointifs au repos. Les deux bords d'extrémité ne sont alors pas susceptibles d'être rapprochés l'un de l'autre, et sont seulement susceptibles d'être écartés l'un de l'autre.

La présente invention n'est nullement limitée aux exemples de réalisation décrits et à leurs variantes, mais englobe de nombreuses modifications dans le cadre des revendications.

## Revendications

1. Accessoire de moulage de préparations hachées, prévu pour être placé dans un logement (53) d'un dispositif de moulage de préparations hachées (1) comportant un conduit (50) d'admission d'aliments hachés, ledit accessoire présentant une paroi périphérique (41 ; 41' ; 41") définissant un espace de réception d'aliments hachés, et une ouverture de démoulage (45) s'étendant jusqu'à la paroi périphérique (41 ; 41' ; 41"), **caractérisé en ce que** la paroi périphérique (41 ; 41' ; 41") est fendue transversalement et présente deux bords d'extrémité (48, 49) susceptibles d'être écartés l'un de l'autre.

2. Accessoire de moulage de préparations hachées selon la revendication 1, **caractérisé en ce que** ledit accessoire présente une face latérale (42) comportant une ouverture de remplissage (43) prévue pour être disposée en regard du conduit (50) d'admission d'aliments hachés, et une autre face latérale (44) définissant l'ouverture de démoulage (45).

3. Accessoire de moulage de préparations hachées selon la revendication 2, **caractérisé en ce que** la face latérale (42) et l'autre face latérale (44) sont parallèles.

4. Accessoire de moulage de préparations hachées selon l'une des revendications 2 ou 3, **caractérisé en ce que** l'ouverture de remplissage (43) s'étend jusqu'à la paroi périphérique (41 ; 41' ; 41 ").

5. Accessoire de moulage de préparations hachées selon l'une des revendications 1 à 4, **caractérisé en ce que** la paroi périphérique (41 ; 41' ; 41 ") est au moins partiellement déformable élastiquement par flexion.

6. Accessoire de moulage de préparations hachées selon l'une des revendications 1 à 5, **caractérisé en ce que** ledit accessoire est muni de moyens de préhension (47).

7. Accessoire de moulage de préparations hachées selon la revendication 6, **caractérisé en ce que** deux moyens de préhension (47) sont agencés aux extrémités de la paroi périphérique (41 ; 41' ; 41").

8. Accessoire de moulage de préparations hachées selon l'une des revendications 1 à 7, **caractérisé en ce que** la paroi périphérique (41 ; 41' ; 41") présente une nervure extérieure (63, 64) sur au moins une portion de sa longueur.

9. Accessoire de moulage de préparations hachées selon l'une des revendications 1 à 8, **caractérisé en ce que** la paroi périphérique (41 ; 41' ; 41") présente au moins une nervure interne (81, 82, 83) permettant de diviser le flux de remplissage.

10. Accessoire de moulage de préparations hachées selon l'une des revendications 1 à 9, **caractérisé en ce que** la paroi périphérique (41 ; 41' ; 41 ") présente au moins une zone interne convexe sur toute la hauteur de ladite paroi périphérique.

11. Accessoire de moulage de préparations hachées selon la revendication 5, **caractérisé en ce que** les bords d'extrémité (48, 49) sont susceptibles d'être rapprochés l'un de l'autre.

12. Dispositif de moulage de préparations hachées, comportant un logement (53) recevant un accessoire de moulage de préparations hachées (40 ; 40' ; 40") selon la revendication 11, **caractérisé en ce que** les bords d'extrémité (48, 49) sont rapprochés l'un de l'autre lorsque l'accessoire de moulage de préparations hachées (40 ; 40' ; 40") est en place dans le logement (53).

## Claims

1. An accessory for molding minced preparations, which accessory is designed to be placed in a cavity (53) of a device (1) for molding minced preparations, which cavity has a minced food inlet duct (50), said accessory having a peripheral wall (41; 41'; 41") defining a space for receiving minced food, and an unmolding opening (45) extending to the peripheral wall (41; 41'; 41"), said accessory being **characterized in that** the peripheral wall (41; 41'; 41") is split transversely and has two end edges (48, 49) that are suitable for being moved apart from each other.

2. An accessory for molding minced preparations according to claim 1, **characterized in that** said accessory has a side face (42) provided with a filling opening (43) designed to be placed facing the minced food inlet duct (50), and another side face (44) defining the unmolding opening (45).

3. An accessory for molding minced preparations according to claim 2, **characterized in that** the side face (42) and the other side face (44) are parallel.

4. An accessory for molding minced preparations according to claim 2 or claim 3, **characterized in that** the filling opening (43) extends to the peripheral wall (41; 41'; 41").

5. An accessory for molding minced preparations according to any one of claims 1 to 4, **characterized in that** the peripheral wall (41; 41'; 41") is at least partially elastically deformable in bending.

6. An accessory for molding minced preparations according to any one of claims 1 to 5, **characterized in that** said accessory is provided with handle means (47) for taking hold of it.

7. An accessory for molding minced preparations according to claim 6, **characterized in that** two handle means (47) are arranged at the ends of the peripheral wall (41; 41'; 41").

8. An accessory for molding minced preparations according to any one of claims 1 to 7, **characterized in that** the peripheral wall (41; 41'; 41") has an external rib (63, 64) over at least a fraction of its length.

9. An accessory for molding minced preparations according to any one of claims 1 to 8, **characterized in that** the peripheral wall (41; 41'; 41") has at least one internal rib (81, 82, 83) making it possible to subdivide the filling flow.

10. An accessory for molding minced preparations according to any one of claims 1 to 9, **characterized in that** the peripheral wall (41; 41'; 41") has at least one internal zone that is convex over the entire height of said peripheral wall.

11. An accessory for molding minced preparations according to claim 5, **characterized in that** the end edges (48, 49) are suitable for being offset towards each other.

12. A device for molding minced preparations, which device has a cavity (53) for receiving an accessory (40; 40'; 40") for molding minced preparations according to claim 11, the device being **characterized in that** the end edges (48, 49) are offset towards each other when the accessory (40; 40'; 40") is in place in the cavity (53).

## Patentansprüche

1. Zubehör zum Formen von gehackten Zubereitungen, das dazu vorgesehen ist, in eine Aufnahme (53) einer Vorrichtung zum Formen von gehackten Zubereitungen (1) eingesetzt zu werden, mit einer Leitung (50) zum Einlassen von gehackten Lebensmitteln, wobei das Zubehör eine umlaufende Wand (41; 41'; 41") aufweist, die einen Raum zur Aufnahme von gehackten Lebensmitteln definiert, und mit einer Entformungsöffnung (45), die sich bis zur umlaufenden Wand (41; 41'; 41") erstreckt, **dadurch gekennzeichnet, dass** die umlaufende Wand (41; 41'; 41 ") quer geschlitzt ist und zwei Abschlussränder (48, 49) aufweist, die voneinander entfernt werden können.

2. Zubehör zum Formen von gehackten Zubereitungen nach Anspruch 1, **dadurch gekennzeichnet, dass** das Zubehör eine Seitenfläche (42) aufweist, die eine Einfüllöffnung (43) umfasst, die dazu vorgesehen ist, gegenüber der Leitung (50) zum Einlassen von gehackten Lebensmitteln angeordnet zu werden, und eine weitere Seitenfläche (44), die die Entformungsöffnung (45) definiert.

3. Zubehör zum Formen von gehackten Zubereitungen nach Anspruch 2, **dadurch gekennzeichnet, dass** die Seitenfläche (42) und die weitere Seitenfläche (44) parallel sind.

4. Zubehör zum Formen von gehackten Zubereitungen nach einem der Ansprüche 2 oder 3, **dadurch gekennzeichnet, dass** die Einfüllöffnung (43) sich bis zur umlaufenden Wand (41; 41'; 41") erstreckt.

5. Zubehör zum Formen von gehackten Zubereitungen nach einem der Ansprüche 1 bis 4, **dadurch gekennzeichnet, dass** die umlaufende Wand (41; 41'; 41 ") durch Biegung mindestens teilweise elastisch verformbar ist.

6. Zubehör zum Formen von gehackten Zubereitungen nach einem der Ansprüche 1 bis 5, **dadurch gekennzeichnet, dass** das Zubehör mit Greifmitteln (47) versehen ist.

7. Zubehör zum Formen von gehackten Zubereitungen nach Anspruch 6, **dadurch gekennzeichnet, dass** zwei Greifmittel (47) an den Enden der umlaufenden Wand (41; 41'; 41 ") angeordnet sind.

8. Zubehör zum Formen von gehackten Zubereitungen nach einem der Ansprüche 1 bis 7, **dadurch gekennzeichnet, dass** die umlaufende Wand (41; 41'; 41") an mindestens einem Abschnitt ihrer Länge eine Außenrippe (63, 64) aufweist

9. Zubehör zum Formen von gehackten Zubereitungen nach einem der Ansprüche 1 bis 8, **dadurch gekennzeichnet, dass** die umlaufende Wand (41; 41'; 41 ") mindestens eine Innenrippe (81, 82, 83) aufweist, die es ermöglicht, den Einfüllfluss zu teilen.

10. Zubehör zum Formen von gehackten Zubereitungen nach einem der Ansprüche 1 bis 9, **dadurch gekennzeichnet, dass** die umlaufende Wand (41; 41'; 41 ") auf der gesamten Höhe der umlaufenden Wand mindestens einen konvexen Innenbereich aufweist.

11. Zubehör zum Formen von gehackten Zubereitungen nach Anspruch 5, **dadurch gekennzeichnet, dass** die Abschlussränder (48, 49) aneinander angenähert werden können.

12. Vorrichtung zum Formen von gehackten Zubereitungen, mit einer Aufnahme (53), die ein Zubehör zum Formen von gehackten Zubereitungen (40, 40', 40") nach Anspruch 11, **dadurch gekennzeichnet, dass** die Abschlussränder (48, 49) aneinander angenähert sind, wenn das Zubehör zum Formen von gehackten Zubereitungen (40, 40', 40") in der Aufnahme (53) eingesetzt ist.
